# DEMANDE DE BREVET EUROPEEN

(11) **EP 4 387 164 A1**
(43) Date de publication de la demande: **19.06.2024**
(21) Numéro de dépôt: 23216975.5
(22) Date de dépôt: 15.12.2023
(51) Int. Cl.: H04L 9/32

(54) **CONTRÔLE D'INTÉGRITÉ DE BOUT EN BOUT D'UN FLUX DE COMMUNICATION**

(30) Priorité: 16.12.2022 FR 2213599
(71) Demandeur: THALES, 92190 Meudon (FR)
(72) Inventeur: MONNIER, Stéphane, 33700 MERIGNAC (FR)
(74) Mandataire: Lavoix

(57) **Abrégé**

L'invention concerne un procédé (50) d'un tel contrôle d'intégrité, comprenant :
- une allocation (52) d'identifiant virtuel, à chaque flux, uniquement connu de chaque émetteur ou récepteur, localisé à une extrémité de flux;
- une émission (60) par un émetteur en un bout d'un flux, d'un message comprenant les données utiles, la valeur (SN) du compteur de messages émis, et un agrégat d'émission (HASH) déterminé à partir de l'identifiant virtuel (VID) connu de l'émetteur, la valeur (SN), les données utiles ;
- la réception (64) par un récepteur, à l'autre bout dudit flux, dudit message et la détermination (66) d'un agrégat de réception (HASH') à partir de l'identifiant virtuel (VID') connu du récepteur, la valeur (SN) reçue; les données utiles reçues ;
- le contrôle (68) d'intégrité de bout en bout par comparaison desdits agrégats d'émission et de réception.

## Description

La présente invention concerne un procédé de contrôle d'intégrité de bout en bout d'un flux de communication communiqué au sein d'un réseau sensible au temps.

L'invention concerne également un programme d'ordinateur associé audit procédé.

L'invention concerne également un port de communication d'un réseau sensible au temps, ledit port de communication étant émetteur ou récepteur, et propre à être localisé à une extrémité de flux de communication communiqué au sein dudit réseau sensible au temps.

L'invention concerne également un réseau sensible au temps TSN (de l'anglais *Time Sensitive Network*).

L'invention se situe dans le domaine de la communication réseau, et plus particulièrement de la communication au sein d'un réseau avionique utilisé en aéronautique.

Actuellement dans ce domaine avionique, seule la solution basée sur l'utilisation de la norme ARINC 664 P7 tel qu'effectué au sein du réseau Ethernet appelée AFDX^{™} (de l'anglais *Avionics Full DupleX switched ethernet*) permet de disposer d'un système de communication réseau redondant, qui garantit à la fois : une gigue maximum, que le contenu est authentique et propre à résister à des émissions répétitives causées par exemple par une panne ou une cyberattaque provoquant par exemple un déni de service.

Les évolutions aux normes Ethernet du groupe TSN (de l'anglais *Time Sensitive Network*) de l'IEEE adressent la plupart des besoins en déterminisme, en garantie de bande passante et en redondance d'un réseau aéronautique.

Toutefois, actuellement de tels réseaux Ethernet sensibles au temps TSN ne parviennent pas à couvrir certaines propriétés de la norme ARINC 664 P7 mise en oeuvre au sein d'un réseau AFDX^{™}, à savoir les propriétés relatives à la robustesse aux disfonctionnements des équipements réseau, qui restent incomplètement couvertes.

Plus précisément, la norme ARINC 664 P7 mise en oeuvre au sein d'un réseau AFDX^{™} requiert notamment qu'un commutateur (de l'anglais *switch*), présentant un niveau d'assurance de développement DAL (de l'anglais *Design Assurance Level*) de niveau A, garantisse la transmission de trames sans altération, donc sans capacité de re-calcul du contrôle de redondance cyclique CRC (de l'anglais Cyclic Redundancy Check).

La capacité de répondre à une telle exigence associée au réseau AFDX^{™} est très difficile à démontrer au sein de produits informatiques standard, également appelés produits COTS (de l'anglais *commercial off-the-shelf*), pouvant reconstruire une trame Ethernet et disposant de la fonction de calcul de contrôle de redondance cyclique CRC pour le support de certains protocoles tels que « VLAN tagging » de l'IEEE802.1Q.

De plus, la norme ARINC 664 P7 mise en oeuvre au sein d'un réseau AFDX^{™} fournit la spécification de capacités de robustesse à des défauts bien spécifiques tels que la répétition, de la part d'un émetteur, d'une même trame ou la discontinuité d'une séquence de transmission. Une telle spécification n'est pas adressée au sein des normes Ethernet du groupe TSN (de l'anglais *Time Sensitive Network*) de l'IEEE.

La norme ARINC 664 P7 mise en oeuvre au sein d'un réseau AFDX^{™} présente quant à elle l'inconvénient d'être mis en oeuvre uniquement par des équipements informatiques propriétaires conformes au réseau AFDX^{™} plus coûteux que des produits COTS et non optimum en termes de bande passante.

L'invention a pour objet de remédier aux inconvénients de l'état de la technique en proposant une solution alternative à la communication réseau AFDX^{™} tout en adressant également les mêmes exigences en termes de robustesse aux disfonctionnements des équipements réseau.

A cet effet, l'invention propose un procédé de contrôle d'intégrité de bout en bout d'un flux de communication communiqué au sein un réseau sensible au temps TSN, ledit réseau sensible au temps TSN étant un réseau de communication avionique le procédé comprenant :
- une phase préalable d'allocation virtuelle d'un identifiant virtuel à chaque flux de communication propre à être communiqué au sein dudit réseau sensible au temps TSN, ledit identifiant virtuel étant uniquement connu de chaque port de communication, émetteur ou récepteur, propre à être localisé à une extrémité de flux de communication ;
- une phase d'émission de message mise en oeuvre par un port de communication émetteur localisé en un bout d'un flux de communication, ladite phase d'émission comprenant les étapes suivantes, pour chaque message émis au sein dudit flux :
   - l'incrémentation de la valeur d'un compteur de messages émis ;
   - la détermination d'un agrégat d'émission de contrôle d'intégrité obtenu à partir de :
      - l'identifiant virtuel dudit flux de communication connu par ledit port de communication émetteur,
      - la valeur du compteur de messages émis ;
      - les données utiles à transmettre ;
   - l'émission dudit message, au sein dudit flux, ledit message émis comprenant au moins lesdites données utiles, ladite valeur du compteur de messages émis, et ledit agrégat d'émission ;
- une phase de réception dudit message mise en oeuvre par un port de communication récepteur localisé à l'autre bout dudit flux de communication, ledit port de communication récepteur comprenant un compteur de messages reçus, ladite phase de réception comprenant les étapes suivantes, pour chaque message reçu :
   - la réception dudit message, au sein dudit flux, ledit message reçu comprenant au moins lesdites données utiles, ladite valeur du compteur de messages émis, et ledit agrégat d'émission,
   - la détermination d'un agrégat de réception de contrôle d'intégrité obtenu à partir de :
      - l'identifiant virtuel dudit flux de communication connu par ledit port de communication récepteur,
      - la valeur, du compteur de messages émis, reçue au sein du message reçu ;
      - les données utiles reçues ;
   - le contrôle d'intégrité de bout en bout par comparaison dudit agrégat d'émission audit agrégat de réception, une différence entre ledit agrégat d'émission et ledit agrégat de réception activant le rejet dudit message reçu, alors qu'à l'inverse, lorsque ledit agrégat d'émission et ledit agrégat de réception sont identiques, ledit message reçu est accepté.

Ainsi, la présente invention propose l'adoption d'un principe bout-en-bout (de l'anglais *end-to-end principle*), pour vérifier que toute communication au sein d'un flux de communication au sein dudit réseau sensible au temps TSN est intègre, mettant en oeuvre tout d'abord une allocation préalable d'un identifiant virtuel à chaque flux de communication (i.e. flux de communication) propre à transiter au sein dudit réseau, cet identifiant virtuel étant connu de chaque port de communication, émetteur ou récepteur, propre à être localisé à une extrémité de flux de communication.

Il est à noter que lors de l'émission en tant que telle, un tel identifiant virtuel n'est pas transmis et ne transite donc pas par le réseau, à la différence du message émis comprenant au moins lesdites données utiles, ladite valeur du compteur de messages émis, et ledit agrégat d'émission.

Il est donc impossible d'intercepter, de manière malveillante, un tel identifiant virtuel au cours de la transmission d'un message ou d'imaginer une panne permettant de deviner cet identifiant, ce qui réduit drastiquement le risque de reconstitution de l'agrégat d'émission, l'agrégat d'émission nécessitant, pour sa détermination (i.e. son obtention par calcul), de connaitre cette identifiant virtuel combinée à la valeur du compteur de message émis et aux données utiles.

Le procédé de contrôle d'intégrité de bout en bout d'un flux de communication communiqué au sein d'un réseau sensible au temps TSN proposé selon la présente invention peut également présenter une ou plusieurs des caractéristiques ci-dessous, prises indépendamment ou selon toutes les combinaisons techniquement envisageables :
- ledit agrégat d'émission et ledit agrégat de réception sont obtenus en utilisant la même fonction de détermination d'agrégat, ladite fonction de détermination d'agrégat fournissant uniquement des agrégats irréversibles ;
- ladite fonction de détermination d'agrégat est une fonction de hachage ;
- ladite fonction de hachage est une fonction SHA-1 ;
- ladite fonction de hachage est une fonction SHA-2 ;
- la phase de réception comprend en outre une étape de contrôle de bon séquencement selon laquelle si ladite valeur du compteur de messages émis est égale à la valeur courante du compteur de messages reçus plus un ou plus deux alors le message reçu est également accepté, et la valeur courante du compteur de messages reçus est alors mise à jour en devenant égale à ladite valeur du compteur de messages émis.

L'invention a également pour objet un programme d'ordinateur comportant des instructions logicielles qui, lorsqu'elles sont exécutées par un ordinateur, mettent en oeuvre un procédé de contrôle d'intégrité de bout en bout d'un flux de communication communiqué au sein d'un réseau sensible au temps TSN tel que défini ci-dessus.

Par la suite, la référence à un programme d'ordinateur qui, lorsqu'il est exécuté, effectue l'une quelconque des instructions logicielles précitées, ne se limite pas à un programme d'application s'exécutant sur un ordinateur hôte unique.

En d'autres termes, les termes programme d'ordinateur et logiciel sont utilisés par la suite dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre le procédé de contrôle d'intégrité de bout en bout d'un flux de communication communiqué au sein d'un réseau sensible au temps TSN.

L'invention concerne également un port de communication d'un réseau sensible au temps TSN, ledit port de communication étant émetteur ou récepteur, et propre à être localisé à une extrémité de flux de communication communiqué au sein dudit réseau sensible au temps TSN, ledit port de communication comprenant un ensemble d'éléments dédiés à mettre en oeuvre au moins en partie le procédé de contrôle d'intégrité de bout en bout d'un flux de communication selon l'une quelconque des revendications précédentes, ledit ensemble d'éléments comprenant :
- un espace de stockage mémoire dédié au stockage d'un identifiant virtuel de chaque flux de communication propre à être communiqué au sein dudit réseau sensible au temps TSN ; et au moins un des deux dispositifs suivants correspondants à :
- un dispositif d'émission de message(s) configuré pour émettre au moins un message au sein d'un flux de communication, ledit dispositif d'émission comprenant, pour chaque message émis au sein dudit flux de communication :
   - un compteur de messages émis dont la valeur est configurée pour être incrémentée à chaque message émis;
   - un module de détermination d'un agrégat d'émission de contrôle d'intégrité obtenu à partir de:
      - l'identifiant virtuel dudit flux de communication connu par ledit port de communication en mode émetteur,
      - la valeur du compteur de messages émis ;
      - les données utiles à transmettre ;
   - un module d'émission dudit message, configuré pour émettre au sein dudit flux, ledit message émis comprenant au moins lesdites données utiles, ladite valeur du compteur de messages émis, et ledit agrégat d'émission ;
- un dispositif de réception de message(s) configuré pour recevoir au moins un message au sein d'un autre flux de communication, ledit dispositif de réception comprenant, pour chaque message reçu au sein dudit autre flux de communication :
   - un compteur de messages reçus ;
   - un module de réception dudit message, configuré pour recevoir ledit message au sein dudit autre flux, ledit message reçu comprenant au moins ses données utiles, une valeur du compteur de messages émis, et un agrégat d'émission,
   - un module de détermination d'un agrégat de réception de contrôle d'intégrité obtenu à partir de :
      - l'identifiant virtuel dudit autre flux de communication,
      - la valeur, du compteur de messages émis, reçue au sein du message reçu ;
      - les données utiles reçues ;
   - un module de contrôle d'intégrité de bout en bout configuré pour contrôler l'intégrité de bout en bout par comparaison dudit agrégat d'émission audit agrégat de réception, une différence entre ledit agrégat d'émission et ledit agrégat de réception activant le rejet dudit message reçu, alors qu'à l'inverse, lorsque ledit agrégat d'émission et ledit agrégat de réception sont identiques, ledit message reçu est accepté.

Le port de communication proposé selon la présente invention peut également présenter les caractéristiques selon lesquelles ledit ensemble d'éléments, dédiés à mettre en oeuvre au moins en partie le procédé de contrôle d'intégrité de bout en bout d'un flux de communication selon l'une quelconque des revendications précédentes, est activable/désactivable.

L'invention concerne également un réseau sensible au temps TSN, ledit réseau sensible au temps TSN étant un réseau de communication avionique et ledit réseau comprenant au moins deux ports de communication tels que décrits précédemment.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement un port de communication selon un mode de réalisation de l'invention ;
[Fig 2] la figure 2 est un organigramme d'un procédé de contrôle d'intégrité de bout en bout d'un flux de communication communiqué au sein d'un réseau sensible au temps TSN selon un mode de réalisation de l'invention.

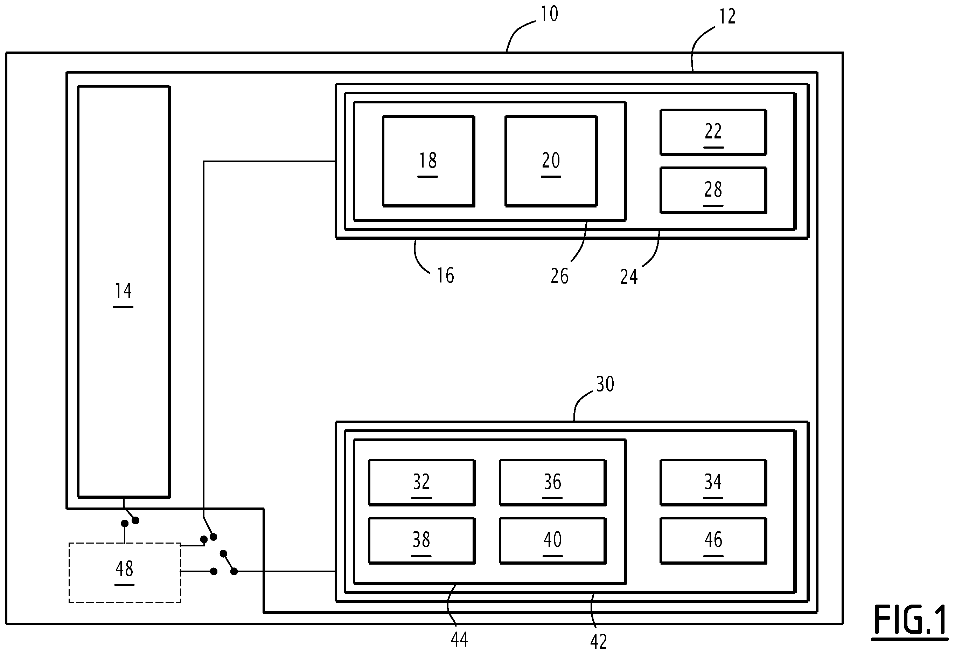

Comme indiqué précédemment, la figure 1 représente schématiquement un port de communication 10 d'un réseau sensible au temps TSN selon un mode de réalisation de l'invention.

Un tel port de communication 10 est propre à être en mode émetteur ou en mode récepteur, et est propre à être localisé à une extrémité (i.e. à un bout) de flux de communication communiqué au sein dudit réseau sensible au temps TSN.

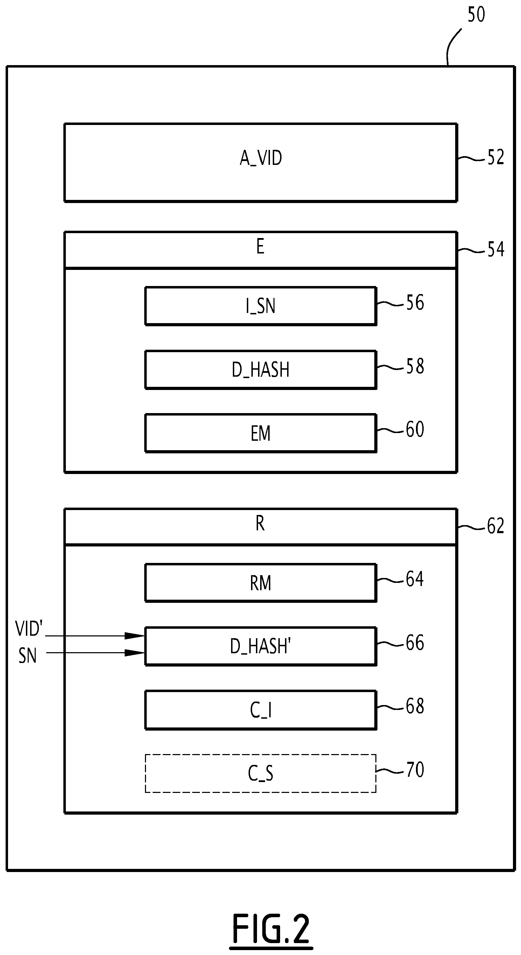

Le port de communication 10 selon la présente invention comprend un ensemble 12 d'éléments dédiés à mettre en oeuvre au moins en partie le procédé de contrôle d'intégrité de bout en bout (de l'anglais *end to end*) d'un flux de communication tel que détaillé par la suite en relation avec la figure 2.

Selon la présente invention, ledit ensemble 12 d'éléments comprend tout d'abord un espace 14 de stockage mémoire dédié au stockage d'un identifiant virtuel, appelé par la suite VID pour un port de communication émetteur (i.e. en mode émission) et VID' pour un port de communication récepteur (i.e. en mode réception), de chaque flux de communication propre à être communiqué au sein dudit réseau sensible au temps TSN.

En outre, ledit ensemble 12 d'éléments comprend, lorsque ledit port de communication 10 est un port de communication émetteur (i.e. en mode émission), un dispositif d'émission 16 de message(s) configuré pour émettre au moins un message au sein d'un flux de communication.

Un tel dispositif d'émission 16 comprend, selon la présente invention, pour chaque message émis au sein dudit flux de communication un compteur 18 de messages émis dont la valeur est configurée pour être incrémentée à chaque message émis. Par la suite, cette valeur de compteur de message émis est appelée SN (de l'anglais *Sequence Number*).

De plus, un tel dispositif d'émission 16 comprend en outre, selon la présente invention, un module 20 de détermination d'un agrégat d'émission, appelé par la suite HASH, de contrôle d'intégrité.

Un tel agrégat d'émission HASH est obtenu par le module 20 de détermination à partir de (i.e. en utilisant) au moins trois types d'informations distinctes correspondant à :
- l'identifiant virtuel VID dudit flux de communication connu par ledit port de communication en mode émetteur,
- la valeur SN du compteur de messages émis ;
- les données utiles du message à transmettre.

De plus, un tel dispositif d'émission 16 comprend en outre, selon la présente invention, un module d'émission 22 en tant que telle dudit message. Plus précisément, un tel module d'émission est configuré pour émettre au sein dudit flux, ledit message émis comprenant au moins lesdites données utiles, ladite valeur SN du compteur de messages émis, et ledit agrégat d'émission HASH.

Selon un aspect illustré par la figure 1, le dispositif électronique d'émission 16 comprend une unité 24 de traitement d'informations formée par exemple d'une mémoire 26 et d'un processeur 28 associé à la mémoire 26.

Selon un exemple particulier, le compteur 18 de messages émis, et le module 20 de détermination d'un agrégat d'émission sont réalisés chacun sous forme d'un logiciel, ou d'une brique logicielle, exécutables par le processeur 28 du dispositif électronique d'émission 16 selon la présente invention. La mémoire 26 du dispositif électronique d'émission 16 est alors apte à stocker un logiciel de comptage de messages émis et un logiciel de détermination d'un agrégat d'émission. Le processeur 28 est alors apte à exécuter chacun de ces logiciels.

En variante non représentée, le compteur 18 de messages émis, et le module 20 de détermination d'un agrégat d'émission sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif électronique d'émission 16 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles.

De plus, ledit ensemble 12 d'éléments comprend, lorsque ledit port de communication 10 est un port de communication récepteur (i.e. en mode réception), un dispositif 30 de réception de message(s) configuré pour recevoir au moins un message au sein d'un autre flux de communication (i.e. distinct d'un flux de communication dont le port de communication est, par exemple en parallèle, également émetteur).

Le dispositif électronique de réception 30 comprend, pour chaque message reçu au sein dudit autre flux de communication, tout d'abord un compteur 32 de messages reçus.

De plus, le dispositif électronique de réception 30 comprend également un module 34 de réception dudit message. Le module 34 de réception est configuré pour recevoir ledit message au sein dudit autre flux, ledit message reçu comprenant au moins ses données utiles, une valeur SN du compteur de messages émis associée audit message reçu, et un agrégat d'émission HASH associé également audit message reçu.

Par ailleurs, le dispositif électronique de réception 30 comprend également un module 36 de détermination d'un agrégat de réception HASH' de contrôle d'intégrité.

Un tel agrégat de réception HASH' est obtenu par le module 36 de détermination à partir de (i.e. en utilisant) au moins trois types d'informations distinctes correspondant à
- l'identifiant virtuel VID' dudit autre flux de communication connu par ledit port de communication en mode récepteur,
- la valeur SN, du compteur de messages émis, reçue au sein du message reçu ;
- les données utiles reçues du message reçu.

De plus, le dispositif électronique de réception 30 comprend également un module 38 de contrôle d'intégrité de bout en bout configuré pour contrôler l'intégrité de bout en bout par comparaison dudit agrégat d'émission HASH audit agrégat de réception HASH', une différence entre ledit agrégat d'émission HASH et ledit agrégat de réception HASH' activant le rejet dudit message reçu, alors qu'à l'inverse, lorsque ledit agrégat d'émission HASH et ledit agrégat de réception HASH', ledit message reçu est accepté.

En complément optionnel, le dispositif électronique de réception 30 comprend en outre un module 40 de contrôle de bon séquencement configuré pour déterminer si ladite valeur SN du compteur de messages émis est égale à la valeur courante SN' du compteur de messages reçus plus un ou plus deux (i.e. tel que SN = SN'+1 ou tel que SN = SN'+2), et alors pour accepter ledit message reçu, la valeur SN' du compteur de messages reçus étant alors mise à jour en devenant égale à ladite valeur SN du compteur de messages émis. Si le module 40 de contrôle de bon séquencement détecte au contraire que SN ≠ SN'+1 ou SN ≠ SN'+2 pour être tolérant à la perte d'un message, le message reçu est rejeté.

Autrement dit, dès que HASH ≠ HASH' le message est rejeté pour défaut d'intégrité.

Si HASH = HASH', mais SN ≠ SN'+1 ou SN ≠ SN'+2, alors le message est également rejeté pour défaut de séquence.

Il est à noter que dans le cas particulier de redémarrage (i.e. remise à zéro de l'anglais *reset*) du dispositif électronique de réception 30, la valeur SN' est initialisée par la valeur SN du premier message reçu après ledit redémarrage (i.e. remise à zéro de l'anglais *reset*) et aucun contrôle de bon séquencement n'est alors mis en oeuvre pour ce premier message reçu après ledit redémarrage (i.e. remise à zéro de l'anglais *reset*).

Autrement dit, lorsqu'aucun message n'a été reçu, SN' n'est pas encore initialisé, et le premier message reçu avec ladite valeur SN du compteur de messages émis est par défaut accepté.

Selon un aspect illustré par la figure 1, le dispositif électronique de réception 30 comprend une unité 42 de traitement d'informations formée par exemple d'une mémoire 44 et d'un processeur 46 associé à la mémoire 44.

Selon un exemple particulier, le compteur 32 de messages reçus, le module 36 de détermination d'un agrégat de réception, le module 38 de contrôle d'intégrité de bout en bout, et optionnellement le module 40 de contrôle de bon séquencement sont réalisés chacun sous forme d'un logiciel, ou d'une brique logicielle, exécutables par le processeur du dispositif selon la présente invention. La mémoire 44 du dispositif électronique de réception 30 est alors apte à stocker un logiciel de comptage de messages reçus, un logiciel de détermination d'un agrégat de réception, un logiciel de contrôle d'intégrité de bout en bout, et optionnellement un logiciel de contrôle de bon séquencement. Le processeur 46 est alors apte à exécuter chacun de ces logiciels.

En variante non représentée, le compteur 32 de messages reçus, le module 36 de détermination d'un agrégat de réception, le module 38 de contrôle d'intégrité de bout en bout, et optionnellement le module 40 de contrôle de bon séquencement sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif électronique de réception 30 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles.

En complément optionnel, ledit agrégat d'émission et ledit agrégat de réception sont obtenus en utilisant la même fonction de détermination d'agrégat, ladite fonction de détermination d'agrégat fournissant uniquement des agrégats irréversibles.

Selon une option avantageuse de ce complément optionnel, ladite fonction de détermination d'agrégat est une fonction de hachage.

Selon une première variante optionnelle, ladite fonction de hachage est une fonction SHA-1, par exemple de 80 bits de long.

Selon une deuxième variante optionnelle, ladite fonction de hachage est une fonction SHA-2, par exemple de 112 bits de long, ou encore une fonction SHA-2 de type SHA-256, SHA-512, SHA-224, SHA-384 etc.

Il est à noter qu'à ce jour de telles fonctions de hachage SHA ne sont pas intégrées dans les protocoles utilisés UDP/IP et Ethernet, et qu'une telle implémentation n'est donc pas évidente pour l'homme du métier.

En complément optionnel, ledit ensemble d'éléments 12, dédiés à mettre en oeuvre au moins en partie le procédé de contrôle d'intégrité de bout en bout d'un flux de communication tel que décrit par la suite en relation avec la figure 2, est activable/désactivable pour certains flux afin de permettre de communiquer avec des éléments du réseau incapables de mettre en oeuvre un tel procédé de contrôle d'intégrité de bout en bout.

Sur la figure 1, une telle option est illustrée par l'élément 48 propre à activer ou non via un ensemble d'interrupteurs les éléments dudit ensemble 12, ce qui permet au port de communication de participer à la mise en oeuvre du procédé de contrôle d'intégrité de bout en bout selon la présente invention, ou en cas d'inactivation dudit ensemble 12 de fonctionner classiquement (i.e. sans contrôle d'intégrité selon la présente invention, mais avec un contrôle d'intégrité classique de type CRC, impropre à prendre en compte la défaillance d'un interrupteur (de l'anglais *switch*) par exemple qui le recalculerait).

Il est à noter que l'élément 48 permet également d'activer le mode émetteur ou le mode récepteur du port de communication en rendant respectivement, actif le dispositif électronique d'émission 16 et inactif le dispositif électronique de réception 30 pour le mode émetteur, et à l'inverse inactif le dispositif électronique d'émission 16 et actif le dispositif électronique de réception 30 pour le mode récepteur, lors que ces deux modes ne sont pas mis en oeuvre en parallèle pour la communication de deux flux distincts où le port de communication de la figure 1 est à la fois émetteur d'un premier flux de communication et récepteur d'un deuxième flux de communication distinct du premier flux de communication.

Selon d'autres variantes non représentées, le port de communication 10 est uniquement émetteur (i.e. en mode émission seulement) et dans ce cas ne comprend pas le dispositif de réception 30 précédemment décrit, ou le port de communication 10 est uniquement récepteur (i.e. en mode réception seulement) et dans ce cas ne comprend pas le dispositif d'émission 16 précédemment décrit.

De plus, selon une autre variante non représentée, chaque lorsque le port de communication est « monomode » l'espace de stockage mémoire 14 est alors intégré au sein du dispositif d'émission 16 si le port de de communication 10 est uniquement émetteur (i.e. en mode émission seulement), ou est intégré au sein du dispositif de réception 30 si le port de de communication 10 est uniquement récepteur (i.e. en mode réception seulement).

A titre d'alternative à la figure 1, lorsque le port de communication est « bi-mode », c'est-à-dire à fonctionner en tant que port de communication émetteur et en tant que port de communication récepteur, l'espace de stockage mémoire 14 n'est pas commun aux dispositifs démission 16 et de réception 30 tel qu'illustré selon le mode de réalisation de la figure 1, mais intégré à chaque de ces deux dispositifs d'émission 16 et de réception 30 respectivement.

On décrit désormais ci-après en relation avec la figure 2 un exemple de fonctionnement d'un contrôle d'intégrité de bout en bout d'un flux de communication communiqué au sein d'un réseau sensible au temps TSN selon un mode de réalisation de l'invention, ledit réseau sensible au temps TSN étant notamment un réseau avionique comprenant au moins deux ports de communication tel que décrits précédemment en relation avec la figure 1.

Plus précisément, le procédé 50 de maintien de l'intégrité du positionnement de bout en bout d'un flux de communication communiqué mis en oeuvre au sein dudit réseau sensible au temps TSN comprend tout d'abord une première phase 52 préalable d'allocation virtuelle A_VID d'un identifiant virtuel à chaque flux de communication propre à être communiqué au sein dudit réseau sensible au temps TSN, ledit identifiant virtuel étant uniquement connu de chaque port de communication, émetteur ou récepteur, propre à être localisé à une extrémité de flux de communication et stocké au sein de l'espace de stockage mémoire 14 dédié tel qu'illustré en relation avec la figure 1.

Par exemple, un flux de communication F₁ correspond à un flux de données, entre un premier port P₁ de communication émetteur (i.e. en mode émission), à une extrémité du flux de données F₁, et un deuxième port P₂ de communication récepteur à l'autre extrémité du flux de données F₁ et est identifié avec le VID=VID'= 63, tandis qu'un flux de communication correspondant à un flux vidéo F₂ entre ces deux mêmes ports P₁ et P₂ est identifié avec un identifiant distinct tel que VID=VID'= 65.

Selon un autre exemple, un autre flux de communication F₃ correspond à un flux de données entre le premier port P₁ de communication émetteur (i.e. en mode émission), à une extrémité du flux de données F₃, et un port P₃ de communication récepteur à l'autre extrémité du flux de données F₃ et est identifié avec le VID=VID'= 91, etc.

Puis, pour chaque message à émettre, le procédé 50 de maintien de l'intégrité de bout en bout d'un flux de communication comprend une phase 54 d'émission E de message mise en oeuvre par un port de communication émetteur (i.e. en mode émission) localisé en un bout du flux de communication considéré.

La phase 54 d'émission E comprend notamment les étapes décrites par la suite, pour chaque message émis au sein dudit flux considéré.

Une première étape 56 d'incrémentation I_SN de la valeur SN d'un compteur 18 de messages émis est mise en oeuvre par le port de communication émetteur (i.e. en mode émission) localisé en un bout du flux de communication considéré.

Puis, selon une étape 58, le port de communication émetteur (i.e. en mode émission), localisé en un bout du flux de communication considéré, met en oeuvre, via son module de détermination 20, la détermination D_HASH d'un agrégat HASH d'émission de contrôle d'intégrité obtenu à partir d'un triplet d'éléments de nature distincte à savoir l'identifiant virtuel VID dudit flux de communication connu par ledit port de communication émetteur (i.e. en mode émission), la valeur SN du compteur de messages émis, et les données utiles (de l'anglais *payload*) à transmettre en tant que telles au sein dudit message.

Ensuite selon une étape 60, le port de communication émetteur (i.e. en mode émission), localisé en un bout du flux de communication considéré, met en oeuvre, via son module d'émission 22, l'émission EM en tant que telle dudit message, au sein dudit flux, ledit message émis comprenant au moins lesdites données utiles, ladite valeur SN du compteur de messages émis, et ledit agrégat d'émission HASH.

Une phase 62 de réception R dudit message est mise en oeuvre par un port de communication récepteur (i.e. en mode réception) localisé à l'autre bout dudit flux de communication, ledit port de communication récepteur (i.e. en mode réception) comprenant, comme vu précédemment en relation avec la figure 1, un compteur 32 de messages reçus.

Ladite phase 62 de réception R comprend les étapes décrites par la suite, pour chaque message reçu décrites dudit flux considéré.

Tout d'abord, au sein de cette phase 62, une première étape 64 de réception RM dudit message, au sein dudit flux est mise en oeuvre, ledit message reçu comprenant au moins, comme indiqué précédemment, lesdites données utiles (i.e. payload), ladite valeur SN du compteur 18 de messages émis, et ledit agrégat d'émission HASH.

Puis, selon une étape 66, le port de communication récepteur (i.e. en mode réception) localisé à l'autre bout dudit flux de communication met en oeuvre, via son module de détermination 36, la détermination D_HASH' d'un agrégat de réception HASH' de contrôle d'intégrité obtenu à partir d'un triplet d'éléments de nature distincte à savoir : l'identifiant virtuel VID' dudit flux de communication connu par ledit port de communication récepteur (i.e. en mode réception), la valeur SN, du compteur de messages émis, reçue au sein du message reçu, et les données utiles reçues.

La phase de réception 62 comprend ensuite une étape 68, mise en oeuvre par le port de communication récepteur (i.e. en mode réception) localisé à l'autre bout dudit flux de communication, via son module de contrôle 38, de contrôle d'intégrité C_I de bout en bout par comparaison dudit agrégat d'émission HASH audit agrégat de réception HASH'.

En effet, en cas d'intégrité, l'identifiant virtuel du flux VID connu et stocké côté port de communication émetteur (i.e. en mode émission) est identique au VID' stocké côté port de communication récepteur (i.e. en mode réception), cet identifiant de flux ne transitant avantageusement jamais en tant que tel au sein du réseau lors de l'envoi d'un message, ce qui réduit drastiquement le risque de reconstitution accidentelle d'un agrégat de contrôle correct à partir de données corrompues en cours de transport.

En conséquence, en cas d'intégrité, pour un même message transmis via ledit flux de communication considéré, l'agrégat d'émission HASH est identique audit agrégat de réception HASH', et le message reçu correspondant est accepté (i.e. conservé).

En revanche, lors de ladite étape 68 de comparaison, une différence entre ledit agrégat d'émission HASH et ledit agrégat de réception HASH' active le rejet dudit message reçu. Autrement dit, si le contrôle d'intégrité échoue du fait que HASH≠ HASH' alors le message est ignoré pour cause de défaut d'intégrité.

Selon une variante particulière, ledit agrégat d'émission HASH et ledit agrégat de réception HASH' sont obtenus en utilisant la même fonction de détermination d'agrégat, ladite fonction de détermination d'agrégat fournissant uniquement des agrégats irréversibles.

Selon une option avantageuse de ce complément optionnel, ladite fonction de détermination d'agrégat est une fonction de hachage. Une telle fonction de hachage est dissimilaire de la fonction de contrôle de redondance cyclique CRC (de l'anglais *Cyclic Redundancy Check*), notamment utilisée par ailleurs classiquement pour contrôler l'intégrité des trames.

Parmi les fonctions de hachage, les algorithmes de la famille des SHA (de l'anglais *Secure Hash Algorithm*) permettent de répondre au besoin d'obtention d'agrégats irréversibles, les systèmes sur puce SOC (de l'anglais System On Chip) fournissant désormais une accélération du matériel informatique (de l'anglais *hardware*) de ces fonctions de hachage, notamment cryptographiques, ce qui en facilite l'utilisation.

Selon une première variante optionnelle, ladite fonction de hachage est une fonction SHA-1, par exemple de 80 bits de long.

Selon une deuxième variante optionnelle, ladite fonction de hachage est une fonction SHA-2, par exemple de 112 bits de long, ou encore une fonction SHA-2 de type SHA-256, SHA-512, SAH 224, SHA-384 etc., la taille de la valeur de hash devant résulter d'un compromis avec le coût sur la taille des données utiles (taille de la payload).

En complément optionnel, la phase de réception 62 comprend également une étape 70 de contrôle de bon séquencement selon laquelle si ladite valeur SN du compteur de messages émis est égale à la valeur SN' du compteur de messages reçus plus un ou plus deux, (i.e. SN=SN'+1 ou SN=SN'+2) alors le message reçu est également accepté, et la valeur SN' du compteur de messages reçus est alors mise à jour en devenant égale à ladite valeur SN du compteur de messages émis. Une telle option permet d'exploiter la valeur reçue SN du compteur de messages émis pour contrôler le bon séquencement, en plus du contrôle d'intégrité précédemment décrit, et ainsi de resynchroniser rapidement en ne perdant qu'un seul message, le message reçu correspondant à une évolution continue de séquence si bien qu'il est accepté.

En revanche, si SN≠SN'+1 ou SN ≠ SN'+2 alors le message reçu est rejeté pour défaut de séquencement.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention propose ainsi une solution de communication réseau adaptées aux exigences avioniques en tirant profit des avantages d'un réseau sensible au temps TSN, en termes de coût et de bande passante tout en étant robuste aux disfonctionnements des équipements réseau.

De plus, l'adoption du principe de bout en bout proposé selon la présente invention, qui distribue, optionnellement de manière activable/désactivable, le contrôle d'intégrité uniquement sur les ports de communications émetteurs et récepteurs du réseau localisés à chaque extrémité de flux de communication, permet en outre la cohabitation de trafic avec contrôle d'intégrité et de trafic sans contrôle d'intégrité, augmentant le niveau de flexibilité d'utilisation du réseau.

## Revendications

1. Procédé (50) de contrôle d'intégrité de bout en bout d'un flux de communication communiqué au sein d'un réseau sensible au temps TSN, ledit réseau sensible au temps TSN étant un réseau de communication avionique le procédé comprenant :
- une phase préalable d'allocation virtuelle (52) d'un identifiant virtuel à chaque flux de communication propre à être communiqué au sein dudit réseau sensible au temps TSN, ledit identifiant virtuel étant uniquement connu de chaque port de communication, émetteur ou récepteur, propre à être localisé à une extrémité de flux de communication ;
- une phase d'émission (54) de message mise en oeuvre par un port de communication émetteur localisé en un bout d'un flux de communication, ladite phase d'émission comprenant les étapes suivantes, pour chaque message émis au sein dudit flux :
- l'incrémentation (56) de la valeur d'un compteur de messages émis ;
- la détermination (58) d'un agrégat d'émission (HASH) de contrôle d'intégrité obtenu à partir de :
- l'identifiant virtuel (VID) dudit flux de communication connu par ledit port de communication émetteur,
- la valeur (SN) du compteur de messages émis ;
- les données utiles à transmettre ;
- l'émission (60) dudit message, au sein dudit flux, ledit message émis comprenant au moins lesdites données utiles, ladite valeur (SN) du compteur de messages émis, et ledit agrégat d'émission (HASH) ;
- une phase de réception (62) dudit message mise en oeuvre par un port de communication récepteur localisé à l'autre bout dudit flux de communication, ledit port de communication récepteur comprenant un compteur de messages reçus, ladite phase de réception comprenant les étapes suivantes, pour chaque message reçu :
- la réception (64) dudit message, au sein dudit flux, ledit message reçu comprenant au moins lesdites données utiles, ladite valeur (SN) du compteur de messages émis, et ledit agrégat d'émission (HASH),
- la détermination (66) d'un agrégat de réception (HASH') de contrôle d'intégrité obtenu à partir de :
- l'identifiant virtuel (VID') dudit flux de communication connu par ledit port de communication récepteur,
- la valeur (SN), du compteur de messages émis, reçue au sein du message reçu ;
- les données utiles reçues ;
- le contrôle (68) d'intégrité de bout en bout par comparaison dudit agrégat d'émission (HASH) audit agrégat de réception (HASH'), une différence entre ledit agrégat d'émission (HASH) et ledit agrégat de réception (HASH') activant le rejet dudit message reçu, alors qu'à l'inverse, lorsque ledit agrégat d'émission (HASH) et ledit agrégat de réception (HASH') sont identiques, ledit message reçu est accepté.

2. Procédé (50) de contrôle d'intégrité de bout en bout d'un flux de communication selon la revendication 1, dans lequel ledit agrégat d'émission et ledit agrégat de réception sont obtenus en utilisant la même fonction de détermination d'agrégat, ladite fonction de détermination d'agrégat fournissant uniquement des agrégats irréversibles.

3. Procédé (50) de contrôle d'intégrité de bout en bout d'un flux de communication selon la revendication 2, dans lequel ladite fonction de détermination d'agrégat est une fonction de hachage.

4. Procédé (50) de contrôle d'intégrité de bout en bout d'un flux de communication selon la revendication 3, dans lequel ladite fonction de hachage est une fonction SHA-1.

5. Procédé (50) de contrôle d'intégrité de bout en bout d'un flux de communication selon la revendication 3, dans lequel ladite fonction de hachage est une fonction SHA-2.

6. Procédé (50) de contrôle d'intégrité de bout en bout d'un flux de communication selon l'une quelconque des revendications précédentes, dans lequel la phase de réception comprend en outre une étape (70) de contrôle de bon séquencement selon laquelle si ladite valeur (SN) du compteur de messages émis est égale à la valeur courante (SN') du compteur de messages reçus plus un ou plus deux alors le message reçu est également accepté, et la valeur (SN') courante du compteur de messages reçus est alors mise à jour en devenant égale à ladite valeur (SN) du compteur de messages émis.

7. Programme d'ordinateur comportant des instructions logicielles qui, lorsqu'elles sont exécutées par un ordinateur, mettent en oeuvre le procédé de contrôle d'intégrité de bout en bout d'un flux de communication selon l'une quelconque des revendications précédentes.

8. Port (10) de communication d'un réseau sensible au temps TSN, ledit port de communication étant émetteur ou récepteur, et propre à être localisé à une extrémité de flux de communication communiqué au sein dudit réseau sensible au temps TSN,
ledit port de communication étant **caractérisé en ce qu'**il comprend un ensemble d'éléments dédiés à mettre en oeuvre au moins en partie le procédé de contrôle d'intégrité de bout en bout d'un flux de communication selon l'une quelconque des revendications précédentes, ledit ensemble d'éléments comprenant :
- un espace de stockage mémoire (14) dédié au stockage d'un identifiant virtuel de chaque flux de communication propre à être communiqué au sein dudit réseau sensible au temps TSN ;
et au moins un des deux dispositifs suivants correspondants à :
- un dispositif d'émission (16) de message(s) configuré pour émettre au moins un message au sein d'un flux de communication, ledit dispositif d'émission comprenant, pour chaque message émis au sein dudit flux de communication :
- un compteur (18) de messages émis dont la valeur est configurée pour être incrémentée à chaque message émis;
- un module de détermination (20) d'un agrégat d'émission (HASH) de contrôle d'intégrité obtenu à partir de:
- l'identifiant virtuel (VID) dudit flux de communication connu par ledit port de communication en mode émetteur,
- la valeur (SN) du compteur de messages émis ;
- les données utiles à transmettre ;
- un module d'émission (22) dudit message, configuré pour émettre au sein dudit flux, ledit message émis comprenant au moins lesdites données utiles, ladite valeur (SN) du compteur de messages émis, et ledit agrégat d'émission (HASH) ;
- un dispositif de réception (30) de message(s) configuré pour recevoir au moins un message au sein d'un autre flux de communication, ledit dispositif de réception comprenant, pour chaque message reçu au sein dudit autre flux de communication :
- un compteur (32) de messages reçus ;
- un module de réception (34) dudit message, configuré pour recevoir ledit message au sein dudit autre flux, ledit message reçu comprenant au moins ses données utiles, une valeur (SN) du compteur de messages émis, et un agrégat d'émission (HASH),
- un module de détermination (36) d'un agrégat de réception (HASH') de contrôle d'intégrité obtenu à partir de :
- l'identifiant virtuel (VID') dudit autre flux de communication,
- la valeur (SN), du compteur de messages émis, reçue au sein du message reçu ;
- les données utiles reçues ;
- un module (38) de contrôle d'intégrité de bout en bout configuré pour contrôler l'intégrité de bout en bout par comparaison dudit agrégat d'émission (HASH) audit agrégat de réception (HASH'), une différence entre ledit agrégat d'émission (HASH) et ledit agrégat de réception (HASH') activant le rejet dudit message reçu, alors qu'à l'inverse, lorsque ledit agrégat d'émission (HASH) et ledit agrégat de réception (HASH') sont identiques, ledit message reçu est accepté.

9. Port (10) de communication selon la revendication 8 dans lequel ledit ensemble d'éléments, dédiés à mettre en oeuvre au moins en partie le procédé de contrôle d'intégrité de bout en bout d'un flux de communication selon l'une quelconque des revendications précédentes, est activable/désactivable.

10. Réseau sensible au temps TSN **caractérisé en ce que** ledit réseau sensible au temps TSN est un réseau de communication avionique et **en ce que** ledit réseau comprend au moins deux ports de communication selon la revendication 8 ou 9.
